# EUROPÄISCHE PATENTSCHRIFT

(11) **EP 2 801 689 B1**
(45) Veröffentlichungstag und Bekanntmachung des Hinweises auf die Patenterteilung: **24.07.2019**
(21) Anmeldenummer: 14167109.9
(22) Anmeldetag: 06.05.2014
(51) Int. Cl.: H02G 11/00, H05B 3/84, E05F 11/48, E05F 15/689, B60J 3/04

(54) **Fensterhebevorrichtung für ein Kraftfahrzeug**
Window raising device for a motor vehicle
Dispositif lève-vitre pour un véhicule automobile

(30) Priorität: 06.05.2013 DE 102013104602
(43) Veröffentlichungstag der Anmeldung: 12.11.2014
(73) Patentinhaber: Küster Holding GmbH, 35630 Ehringshausen (DE)
(72) Erfinder: Lotz, Andreas, 35614 Aßlar-Berghausen (DE); Medebach, Steffen, 35582 Wetzlar (DE); Schmidt, Andreas, 35606 Solms (DE)
(74) Vertreter: Müller, Eckhard

(56) Entgegenhaltungen:
- CN-U- 202 417 144
- DE-A1- 3 137 351
- DE-A1- 19 930 541
- DE-A1-102009 016 686
- DE-A1-102009 036 267
- JP-A- 2009 136 072
- US-A- 4 939 867

## Beschreibung

Die Erfindung betrifft eine Fensterhebevorrichtung für ein Kraftfahrzeug, die zum Anheben und Absenken einer Fensterscheibe des Kraftfahrzeuges ausgebildet ist.

### Stand der Technik

Fensterhebevorrichtungen der eingangs genannten Art sind im Stand der Technik bekannt. Entsprechende Fensterhebevorrichtungen werden einerseits karosseriefest angeordnet, bspw. in einer Tür des Kraftfahrzeuges, in einer Heckklappe oder in einem Glasschiebedach und werden andererseits mit einer anzuhebenden und abzusenkenden Fensterscheibe verbunden.

Darüber hinaus sind neuerdings elektrisch schaltbare Verglasungen bekannt, deren Lichtdurchlässigkeit durch das Anlegen einer elektrischen Spannung verändert werden kann. Je nach Ausführung können solche Gläser bspw. als Sonnenschutz dienen oder die Funktion eines Sichtschutzes übernehmen. Solche Gläser können bspw. als elektrochromes Glas oder als LC-Glas ausgeführt sein.

Anheb- und absenkbare Fensterscheiben eines Kraftfahrzeuges als entsprechende intelligente Gläser auszuführen bringt die Schwierigkeit mit sich, dass die Fensterscheiben elektrisch verschaltet werden müssen, wobei die Anschlüsse der Verschaltung zu den Fensterscheiben aufgrund der erforderlichen Verstellbarkeit nicht ortsfest zum Fahrzeug sein können.

Die DE 199 30 541 A1 offenbart einen Kraftfahrzeugfensterheber mit einem elektrischen Antrieb und einem Zugmittel. Der Antrieb ist mitfahrend ausgebildet und auf einer Trägerplatte angeordnet, die im Bereich einer Scheibenunterkante über Befestigungsmittel an der Fensterscheibe befestigt ist.

Die WO 2014/122139 A1 offenbart eine Fensterheberbaugruppe für ein Fahrzeug, bei der ein Leitungsführungselement für eine sich zwischen einer verstellbaren Fensterscheibe und einem ortsfesten Fahrzeugelement, zum Beispiel einem Türmodulträger, erstreckenden Leitung quer zu seiner Längserstreckung gewölbt und derart elastisch ausgebildet ist, dass das Leitungsführungselement aufgrund seiner Elastizität bestrebt ist, seine Wölbung beizubehalten und geradlinig zu verlaufen.

Die JP 2009-136072 A, die die Merkmale des Oberbegriffs des Anspruchs 1 offenbart, offenbart einen Fensterheber nach dem Scherenprinzip, in welchem eine elektrische Versorgungsleitung zur Versorgung einer elektrischen Einrichtung an der bewegbaren Fensterscheibe vorgesehen ist. Die elektrische Versorgungsleitung ist so an dem Fensterheber verlegt, dass möglichst wenige mechanische Belastungen während des Betriebs auf die Versorgungsleitung wirken. Die Versorgungsleitung ist an einer Grundplatte des Fensterhebers festgelegt und dann zu einem anderen Teil des Kraftfahrzeugs geführt. An der Grundplatte ist auch ein Antrieb des Fensterhebers befestigt.

Aus der DE 10 2009 016 686 A1 ist eine Scheibe für ein Kraftfahrzeug bekannt mit einem in und/oder auf der Scheibe angeordneten elektrischen Funktionselement, beispielsweise einer auf die Scheibe aufgedampften elektrischen Widerstandsheizung. Das Funktionselement wird mittels eines Steuergerätes angesteuert. An der Scheibenkante ist eine Haltevorrichtung für das Steuergerät vorgesehen. Das Steuergerät wird über elektrische Leitungen mit dem Bordnetz eines Kraftfahrzeugs verbunden.

Aus der DE 31 37 351 A1 ist eine Einklemmschutzeinrichtung für motorisch bewegte Gegenstände, insbesondere zur Verwendung an Kraftfahrzeugen mit motorisch bewegten Fensterscheiben bekannt. Danach ist eine Fensterscheibe eines Kraftfahrzeugs am unteren Rand mit einer Zahnstange verbunden. Ein in der Fahrzeugtür angeordneter Elektromotor steht mit einem auf seiner Abtriebswelle befestigten Antriebsritzel in Eingriff mit der Zahnstange. Ein Drehen des Elektromotors in der einen Drehrichtung führt zu einem Hochdrehen und einem Drehen in der entgegengesetzten Drehrichtung zu einer Absenkung der Fensterscheibe.

Die CN 202417144 U offenbart eine Einklemmschutzeinrichtung zur Verwendung an Kraftfahrzeugen mit motorisch angetriebenen Fensterscheiben. Danach sind kapazitive Sensoren am oberen Rand der Fensterscheibe angeordnet.

Eine Verkabelung der Fensterscheibe muß zusätzlich so ausgeführt sein, dass sie den hohen Belastungen, denen ein Kraftfahrzeug im Fahrzeugleben ausgesetzt ist, standhalten kann.

### Aufgabe

Es ist daher Aufgabe der Erfindung, eine Fensterhebevorrichtung der eingangs genannten Art dahingehend auszuführen, dass sie die Verwendung von intelligenten Gläsern erlaubt. Es ist eine weitere Aufgabe der Erfindung, eine geordnete, stabile Verkabelung von elektrisch beschaltbaren, verfahrbaren Fensterscheiben eines Kraftfahrzeuges zu erreichen.

Die Aufgabe wird gelöst durch eine Fensterhebevorrichtung gemäß Anspruch 1. Weitere Ausgestaltungen der Erfindung sind Gegenstand der Unteransprüche.

Eine erfindungsgemäße Fensterhebevorrichtung für ein Kraftfahrzeug ist zum Anheben und Absenken einer Fensterscheibe des Kraftfahrzeuges ausgebildet. Die Fensterscheibe kann z.B. eine Seitenscheibe, eine Heckscheibe oder ein Schiebedach sein.

Die Fensterhebevorrichtung ist einerseits an einer Fahrzeugkarosserie anordenbar und weist wenigstens ein sich relativ zur Fahrzeugkarosserie bewegliches Bauteil, auf, der mit der anzuhebenden und abzusenkenden Fensterscheibe verbindbar ist.

Das bewegliche Bauteil ist ein Mitnehmer, der von der Fensterhebevorrichtung antreibbar ist. Hierfür weist die Fensterhebevorrichtung einen Fensterhebeantrieb auf.

Die erfindungsgemäße Fensterhebevorrichtung weist eine stromführende Leitung auf, welche mit einem ersten Ende ortsfest bzgl. einer Kraftfahrzeugkarosserie anordenbar ist und mit einem zweiten Ende ortsfest bzgl. eines Mitnehmers der Fensterhebevorrichtung angeordnet ist.

Durch die erfindungsgemäße Anordnung einer stromführenden Leitung in der Fensterhebevorrichtung kann eine geordnete, platzsparende und die stromführende Leitung entlastende Anordnung derselben vorgesehen sein, so dass die zur Beschaltung der Fensterscheibe notwendige stromführende Leitung sicher und geordnet integriert werden kann.

Durch die hohe Systemintegration, die die erfindungsgemäße Fensterhebevorrichtung erlaubt, läßt sich die entsprechende Funktion einer intelligenten Scheibe gut als optionales Zubehör vorsehen. Der logistische Aufwand für den Kraftfahrzeughersteller ist durch die Verwendung einer größeren Anzahl von Gleichteilen reduziert, da die erfindungsgemäße Fensterhebevorrichtung so ausgelegt sein kann, dass sie sämtliche Anschlüsse und Funktionen für die Verwendung der Scheibe mitbringt.

Erfindungsgemäß wird vorgesehen, dass die Leitung mit ihrem ersten Ende an einem Fensterheberantrieb festgelegt ist. Der Fensterhebeantrieb muß ohnehin mit Strom versorgt und auch gesteuert werden, so dass eine Anordnung der stromführenden Leitung mit ihrem ersten Ende an dem Fensterhebeantrieb eine Reduzierung an Schnittstellen zum Kraftfahrzeug ermöglicht, da die beiden Schnittstellen für den Fensterheberantrieb und für das Fenster in eine gemeinsame Schnittstelle integriert werden können oder zumindest ortsnah beieinander angeordnet werden können.

Gemäß einer weiteren möglichen Ausgestaltung der Erfindung kann vorgesehen sein, dass die Leitung an ihrem ersten Ende mittels Schleifkontakten kontaktiert wird. Auf diese Weise kann die Leitung auch rotierend relativ zum Kraftfahrzeug angeordnet werden, wobei eine Stromführung durch die Schleifkontakte gewährleistet ist. Die Schleifkontakte können dabei zylindrisch und/oder ringförmig sein und axial auf einer Ebene und dabei konzentrisch angeordnet sein. Die Pole können auch axial versetzt zueinander angeordnet sein.

Gemäß einer weiteren möglichen weiteren Ausgestaltung der Erfindung kann vorgesehen sein, dass die Leitung über eine Aufwickelvorrichtung geführt ist. Da die Fensterscheibe angehoben und abgesenkt werden kann, ist der Abstand des sich mit der Fensterscheibe mit bewegenden Mitnehmers und des ortsfesten Anschlusses der stromführenden Leitung variabel, so dass eine Aufwickelvorrichtung hilfreich ist, die variablen Abstände zu kompensieren und eine geordnete Aufwicklung der stromführenden Leitung zu ermöglichen. Ein Verknicken oder eine ungeordneten Führung der stromführenden Leitung innerhalb des Kraftfahrzeuges, bspw. der Seitentür, wird dadurch verhindert.

Eine solche Aufwickelvorrichtung kann zum Aufwickeln der Leitung eine Wickeltrommel aufweisen, die federbelastet ist und mithilfe mechanischer Kraft, die auf die Leitung ausgeübt wird, in eine Ausrollrichtung bewegt werden. Lässt die mechanische Kraft auf die Leitung nach, bewirkt die Federvorspannung der Wickeltrommel ein Einholen und Aufwickeln der Leitung.

Gemäß einer weiteren möglichen Ausgestaltung der Erfindung kann die Aufwickelvorrichtung an einer Führungsschiene der Fensterhebevorrichtung angeordnet sein. In einem solchen Bereich läßt sich der für die Aufwickelvorrichtung benötigte Platz gut vorsehen.

Alternativ kann die Aufwickelvorrichtung an dem Fensterheberantrieb angeordnet oder mit diesem kombiniert werden.

Gemäß einer weiteren möglichen Ausgestaltung der Erfindung kann die Leitung als zugbelastbares oder als zug-druck-belastbares Betätigungskabel ausgebildet sein. Auf diese Weise wird ermöglicht, dass die Anzahl an Bauteilen für die Fensterhebevorrichtung reduziert wird.

Gemäß einer weiteren möglichen Ausgestaltung kann die Doppelfunktion als Leitung und zugbelastbaren oder zug-druck-belastbares Betätigungskabel dadurch erreicht werden, dass die Adern der stromführenden Leitung in einer Seele des Betätigungskabels angeordnet sind. Dadurch sind die Adern der stromführenden Leitung gut geschützt vor mechanischen Einflüssen und vor Umwelteinflüssen.

Gemäß einer weiteren möglichen Ausgestaltung der Erfindung kann die Leitung als Spiralkabel ausgebildet sein. Ein solches Spiralkabel kann durch seine Spiralfedereigenschaft Längenunterschiede ausgleichen, sich auf Zug ausdehnen und bei nachlassendem Zug zusammenziehen.

Erfindungsgemäß ist die stromführende Leitung mit ihrem zweiten Ende an dem Mitnehmer festgelegt. Der Mitnehmer kann dann gleichzeitig der Kontakt zu der intelligenten Fensterscheibe darstellen.

Gemäß einer weiteren möglichen Ausgestaltung der Erfindung kann vorgesehen sein, dass die Fensterhebevorrichtung wenigstens einen Teleskoparm aufweist, der an einem ersten Ende schwenkbar an einer Karosserie anordnenbar ist und der an einem zweiten Ende schwenkbar mit dem Mitnehmer verbunden ist. Gemäß einer möglichen Ausgestaltung können zwei Teleskoparme vorgesehen sein.

Gemäß einer weiteren möglichen Ausgestaltung der Erfindung kann die Leitung in oder an dem wenigstens einen Teleskoparm geführt sein.

Der Teleskoparm kann gemäß einer weiteren weiterführenden Ausgestaltung der Erfindung zumindest teilweise selbst als Leitung ausgeführt sein, indem eine oder mehrere Leiterbahnen in dem Teleskoparm angeordnet sind, die von der als Kabel ausgeführten Leitung beiderseits kontaktiert werden. Die Leiterbahnen können beispielsweise an oder in einer Hülse des Teleskoparmes angeordnet sein und mittels Schleifkontakten an einer weiteren Hülse kontaktiert werden, sodass über die unterschiedlichen relativen Positionen der beiden Teleskophülsen stets Kontakt besteht.

Die Erfindung betrifft weiterhin ein Kraftfahrzeug mit einer entsprechenden Fensterhebevorrichtung.

### Darstellung der Erfindung

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Der Erfindung wird anhand mehrerer Ausführungsbeispiele erläutert. Dabei zeigen schematisch:
- Fig. 1: eine Fensterhebevorrichtung gemäß einer ersten, nicht erfindungsgemäßen Ausführungsform mit geschlossenem Fenster,
- Fig. 2: die Fensterhebevorrichtung aus Fig. 1 mit geöffnetem Fenster,
- Fig. 3: eine zweite, nicht erfindungsgemäße Ausführungsform einer Fensterhebevorrichtung,
- Fig. 4: eine Detailansicht eines Mitnehmers gemäß der Erfindung,
- Fig. 5a bis 5f: unterschiedliche mögliche Kabelführungsvarianten,
- Fig. 6: eine dritte Ausführungsform der Erfindung,
- Fig. 7: eine vierte Ausführungsform der Erfindung,
- Fig. 8: eine Detaildarstellung der vierten Ausführungsform der Erfindung,
- Fig. 9: eine weitere Detaildarstellung der vierten Ausführungsform der Erfindung,
- Fig. 10: ein Querschnitt durch ein Kabel gemäß der vierten Ausführungsform der Erfindung,
- Fig. 11: eine fünfte Ausführungsform der Erfindung,
- Fig. 12: eine andere Ansicht der fünften Ausführungsform der Erfindung,
- Fig. 13: eine Ansicht einer Aufwickelvorrichtung für die fünfte Ausführungsform der Erfindung,
- Fig. 14: eine sechste Ausführungsform der Erfindung,
- Fig. 15: eine Detailansicht der sechsten Ausführungsform der Erfindung sowie
- Fig. 16: eine weitere Detailansicht der sechsten Ausführungsform der Erfindung.

Gleiche oder gleichwirkende Bauteile werden in den nachfolgend dargestellten unterschiedlichen Ausführungsformen mit gleichen Bezugszeichen versehen, um die Lesbarkeit zu verbessern.

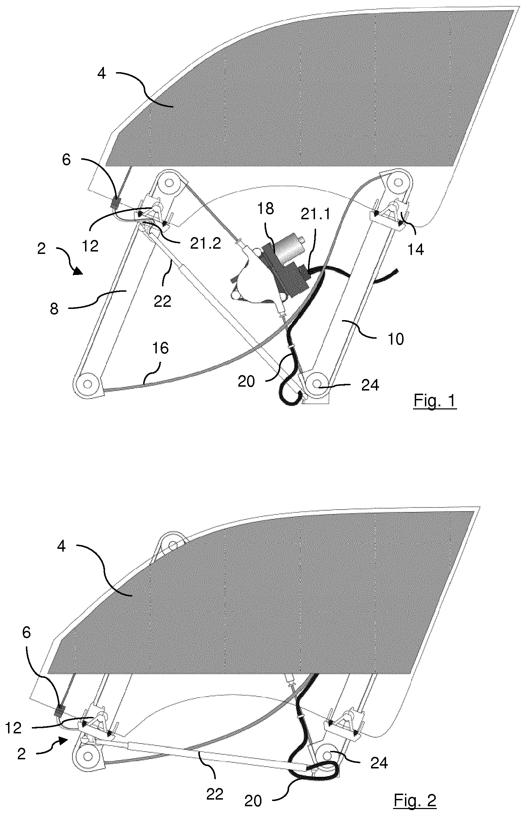

Fig. 1 zeigt eine nicht erfindungsgemäße Fensterhebevorrichtung 2. Die Fensterhebevorrichtung 2 dient zum Anheben eines Fensters 4. Das Fenster 4 weist ein sogenanntes intelligentes Glas auf, das elektrisch umschaltbar mehrere elektrische Zustände annehmen kann, bspw. transparent und opak. Hierzu ist das Fenster 4 mit einem Anschluß 6 versehen, mittels dessen es mit Strom versorgt werden kann. In Abhängigkeit vom Stromfluß können die unterschiedlichen Zustände des Fensters 4 geschaltet werden.

Die Fensterhebevorrichtung 2 weist zwei Führungsschienen 8, 10 auf, an denen Mitnehmer 12, 14 geführt sind. Die Mitnehmer 12, 14 sind an der Scheibe 4 festgelegt. Die Mitnehmer 12, 14 werden mittels eines Seilzuges 16, der von einem Antrieb 18 angetrieben wird, nach oben und nach unten betätigt. Die Fensterhebevorrichtung 2 ist karosseriefest angeordnet, im vorliegenden Fall in einer Tür (nicht dargestellt) des Kraftfahrzeuges.

Die Fensterhebevorrichtung 2 ist mit einer stromführenden Leitung 20 ausgestattet, mit Hilfe derer das Fenster 4 angesteuert wird. Die stromführende Leitung ist mit einem ersten Ende 21.1 an dem Antrieb 18 festgelegt und mit einem zweiten Ende 21.2 an dem Mitnehmer 12.

Die stromführende Leitung 20 ist durch einen Teleskopstab 22 geführt, der einerseits an einem unteren Befestigungspunkt 24 der Führungsschiene 10 schwenkbar festgelegt ist. Andererseits ist der Teleskopstab 22 an dem Mitnehmer 12 schwenkbar festgelegt. Durch den Teleskopstab 22, der eine variable Länge hat, wird die Leitung 20 vom Antrieb 18 zum Anschluß 6 des Fensters 4 auf geordnete Weise geführt.

Die Fensterhebevorrichtung 2 wird mittels einer Zuleitung 26 gesteuert und mit Energie versorgt, so auch die Beschaltung des Fensters 4. Zuleitung 26 und Fensterhebevorrichtung 2 sind über einen Stecker am Antrieb 18 gekoppelt.

Fig. 2 zeigt die Fensterhebevorrichtung 2 aus Fig. 1 mit heruntergefahrenem Fenster 4. Der Teleskopstab 22 ist gegenüber der Position, die er bei geschlossenem Fenster 4 einnimmt, verkürzt und verschwenkt.

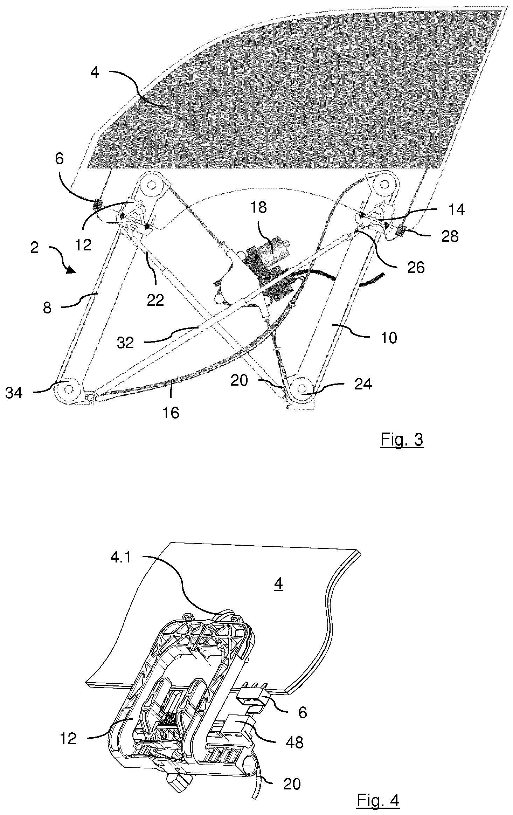

Fig. 3 zeigt eine zweite Ausführungsform.

Im Unterschied zu der in den Fig. 1 und 2 dargestellten Ausführungsform ist die Scheibe 4 hier mittels zweier Anschlüsse 6, 28 verschaltet. Dazu ist eine Leitung 30 vom Antrieb 18 zum zweiten Anschluß 28 durch einen Teleskopstab 32 geführt. Der Teleskopstab 32 ist einenends schwenkbar an einem Befestigungspunkt 34 der Führungsschiene 8 und anderenends schwenkbar am Mitnehmer 14 angelenkt.

Fig. 4 zeigt ein Detail des erfindungsgemäßen Anschlusses der Scheibe 4 an den Mitnehmer 12.

Der Mitnehmer 12 weist mechanische Mittel zur Verrastung der Scheibe 4 auf, die hierzu eine Aufnahme 4.1 besitzt, in die der Mitnehmer 12 mit einem in Fig. 4 nicht sichtbaren Vorsprung eingreift. Desweiteren weist der Mitnehmer 12 einen Stecker 48 auf, der mit dem Anschluß 6 verbunden werden kann und somit einen Kontakt zwischen der Leitung 20 und der Scheibe 4 herstellt. Der Stecker 48 kann abgedichtet sein.

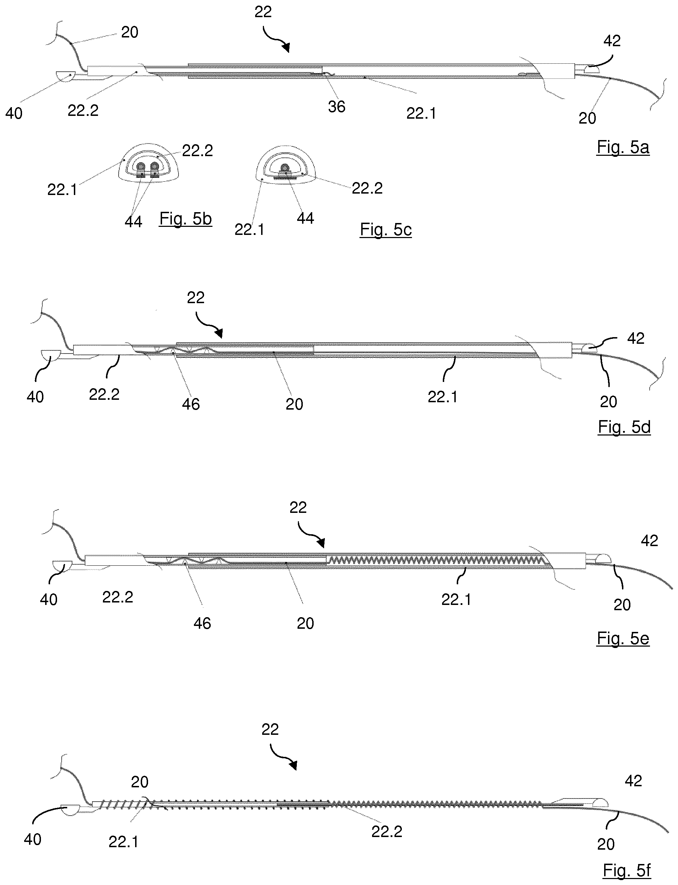

Die Fig. 5a bis 5f zeigen unterschiedliche Möglichkeiten der Führung innerhalb des Teleskopstabs 22. Die Führung kann entsprechend auch im Teleskopstab 32 vorgesehen sein. Der Teleskopstab 22 weist eine äußere Hülse 22.1 sowie eine innere Hülse 22.2 auf. Je nach Länge und notwendigem Teleskophub können auch weitere Hülsen vorgesehen sein.

Die Leitung 20 ist innerhalb der inneren Teleskophülse 22.2 als Kabel ausgeführt, welches an einem Schleifkontakt 36 angeschlossen ist. Der Schleifkontakt 36 kontaktiert eine Innenseite der äußeren Teleskophülse 22.1, die zu diesen Zwecken elektrisch leitend ausgebildet ist. Dies kann durch Vorsehen von Leitungsbahnen verwirklicht werden. Die Leitung 20 wird anderenends ebenfalls als Kabel fortgeführt, welches an einem Kontakt 38 festgelegt ist. Auf diese Weise kann Strom durch den Teleskop 22 geführt sein.

Der Teleskopstab 22 weist desweiteren schwenkbare Befestigungen 40, 42 auf.

Die Fig. 5b und 5c zeigen Querschnitte durch den Teleskopstab 22. In Fig. 5b sind zwei Adern 20.1, 20.2 mittels zweier Schleifkontakte 36 verschaltet. Die Schleifkontakte 36 kontaktieren zwei Leiterbahnen 44.

In Fig. 5c ist ein Querschnitt durch die Ausführungsform gemäß Fig. 5a dargestellt, bei dem nur eine Ader durchgeführt ist. Gemäß dieser Ausführungsform kann ein zweiter Pol des Anschlusses 6 oder 28 an die Fahrzeugmasse angeschlossen sein.

Die Fig. 5d zeigt eine Ausführungsform, bei der die Leitung 20 als durchgehendes Kabel ausgebildet ist. Die Leitung 20 ist an der beweglichen inneren Teleskophülse 22.2 mittels Fixierern 46 fixiert und wird aus der äußeren Teleskophülse 22.1 herausgeschoben bzw. in diese hineingezogen. Bei dieser Ausführungsform entfällt eine Abdichtung.

Gemäß Fig. 5e kann die Leitung 20 ebenfalls durchgeführt sein, wobei die Leitung teilweise als Spiralkabel ausgebildet ist. Das Spiralkabel kann sich aufgrund seiner schraubenfederartigen Eigenschaften zusammenziehen und ausdehnen. Ein Hinausschieben oder Hereinziehen der Leitung 20 aus der äußeren Teleskophülse 22.1 kann vermieden werden.

In Fig. 5f ist die Leitung 20 als Spiralkabel ausgeführt, das um die Aussenseite des Teleskopstabes 22 geführt ist.

Der Teleskopstab 22 kann eine nicht punktsymmetrische Struktur aufweisen, um eine Verdrehung der Teleskophülsen 22.1 und 22.2 gegeneinander zu verhindern.

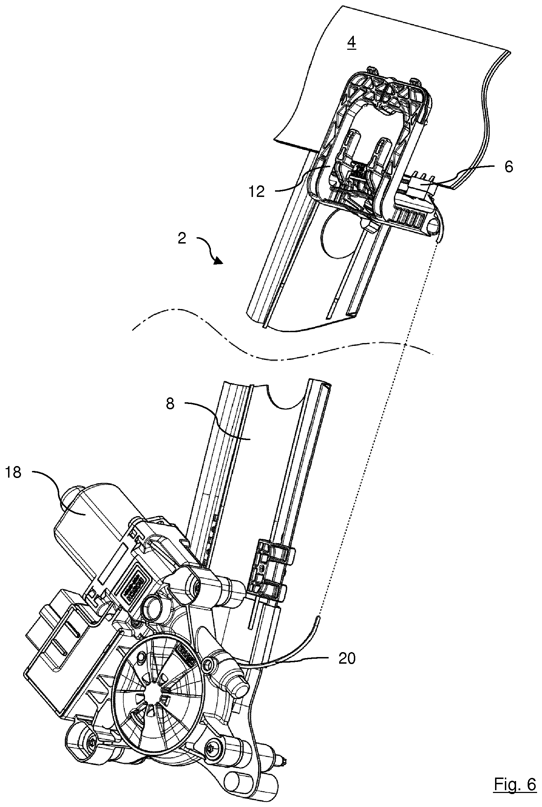

Fig. 6 zeigt eine dritte Ausführungsform der Erfindung. Dabei ist die Leitung 20 vom Antrieb 18 aus entlang der Führungsschiene 8 zum Anschluß 6 geführt. Bei dieser Ausführungsform kann auf die Verwendung eines Teleskopstabes verzichtet werden.

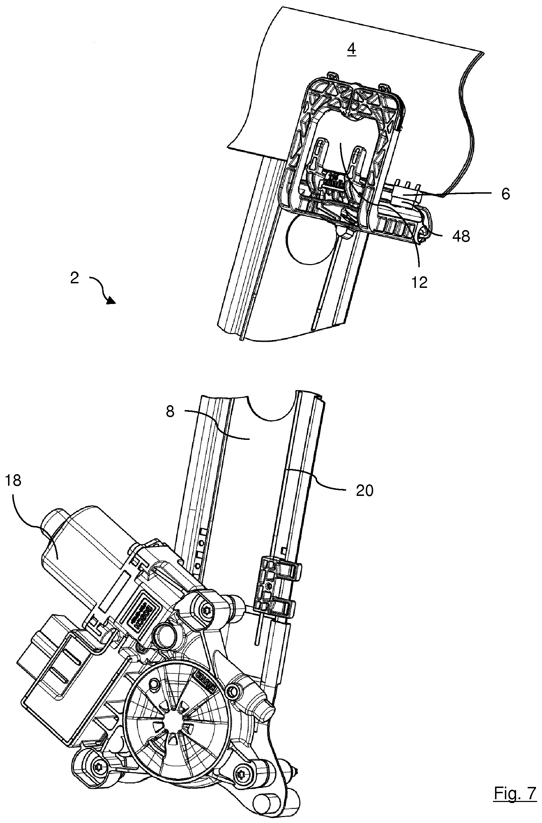

Fig. 7 zeigt eine vierte Ausführungsform der Erfindung. Bei dieser Ausführungsform ist die Leitung 20 in ein Zugkabel integriert. In diesem Fall übernimmt die Leitung 20 sowohl die Funktion der Stromführung als auch die Funktion eines mechanischen Antriebselementes für den Mitnehmer 12.

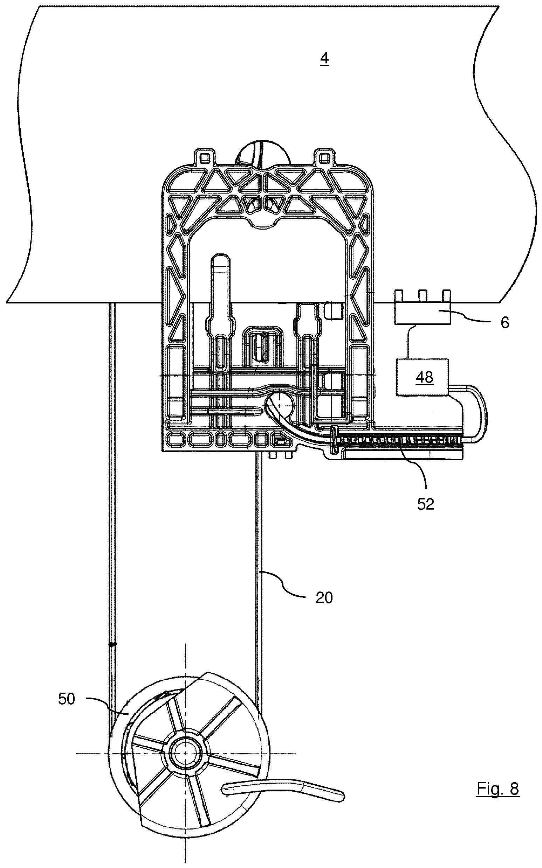

Gemäß Fig. 8 ist die Kabelführung der vierten Ausführungsform gezeigt.

Die Leitung 20 ist über eine Aufwickelvorrichtung 50 geführt, die die Leitung 20 federbelastet aufwickelt. Am Mitnehmer 12 ist die Leitung 20 durch eine Zugentlastung 52 geführt, die den Stecker 48 mechanisch entkoppelt. Die Zugentlastung 52 weist dazu eine Federabstützung der Leitung 20 auf.

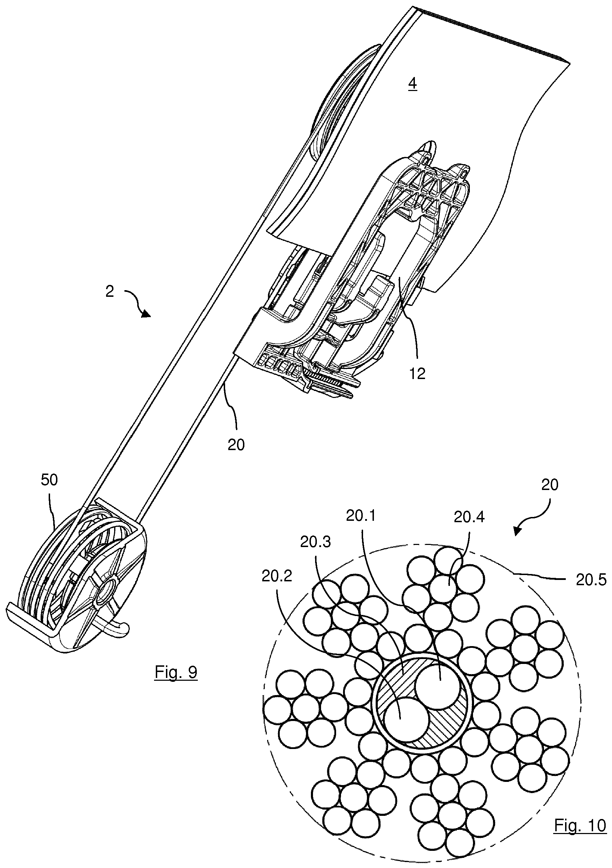

Fig. 9 zeigt eine andere Ansicht der Kabelführung gemäß der vierten Ausführungsform der Erfindung. Die Leitung 20 ist an beiden Enden in die Aufwickelvorrichtung 50 geführt, die somit bewerkstelligt, dass das Kabel stets straff geführt ist.

Fig. 10 zeigt einen Querschnitt durch die Leitung 20. Die Leitung 20 ist als Kabel mit Seele 20.3 und Litzen 20.4 ausgeführt. Das Kabel ist durch eine Kabelhülle 20.5 abgeschlossen. Innerhalb der Seele 20.3 sind die beiden Adern 20.1, 20.2 angeordnet, die ein unterschiedliches elektrisches Potential aufweisen.

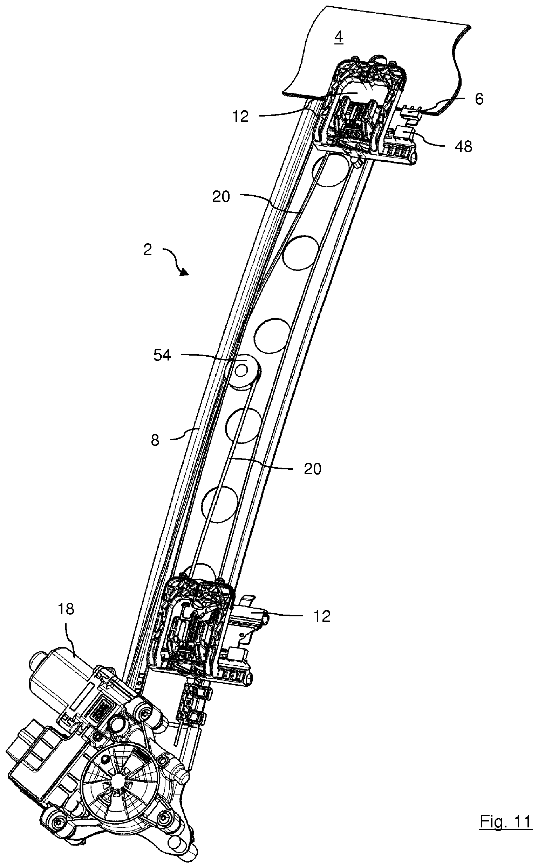

Fig. 11 zeigt eine fünfte Ausführungsform der Erfindung. Bei dieser Ausführungsform ist eine Aufwickelvorrichtung 54 in die Führungsschiene 8 integriert.

Der Mitnehmer 12 ist in Fig. 11 in zwei Positionen gleichzeitig dargestellt, einer unteren Position und einer oberen Position. In der unteren Position wird die Leitung 20 vom Antrieb 18 in der dargestellten Ausrichtung nach oben zur Aufwickelvorrichtung 54 und dann wieder nach unten zum Mitnehmer 12 geführt.

In der oberen Position des Mitnehmers 12 wird die Leitung 20 vollständig nach oben geführt. Die Aufwickelvorrichtung 54 kompensiert unterschiedliche Längen der Leitung 20.

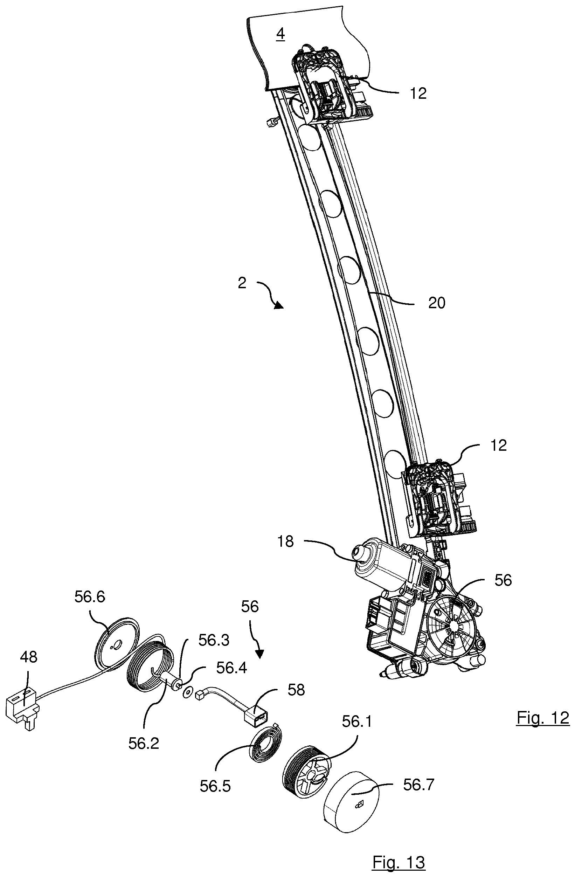

Fig. 12 zeigt eine sechste Ausführungsform der Erfindung, bei der eine Aufwickelvorrichtung 56 in den Antrieb 18 integriert ist. Der Mitnehmer 12 ist in Fig. 12 in zwei unterschiedlichen Positionen, einer unteren Position und einer oberen Position, gleichzeitig dargestellt.

Beim Hoch- bzw. Herunterfahren des Mitnehmers 12 entlang der Führungsschiene 8 wird mittels der Aufwickelvorrichtung 56, die federbelastet ist, die Länge der Leitung 20 angepaßt.

Fig. 13 zeigt eine Explosionsdarstellung der Aufwickelvorrichtung 26.

Die Leitung 20, welche in dem Stecker 48 mündet, ist über eine Wickeltrommel 56.1 gewickelt, und mündet in einer Achse 56.2 der Wickeltrommel 56.1.

Die Achse 56.2 weist stirnseitig zwei Kontakte 56.3, 56.4 auf, welche konzentrisch angeordnet sind. Die Kontakte 56.3, 56.4 sind als Schleifkontakte ausführt, welche in einem Stecker 58 münden.

Die Wickeltrommel 56.1 ist mittels einer Spiralfeder 56.5 vorgespannt in einem Gehäuse 56.6, 56.7 angeordnet.

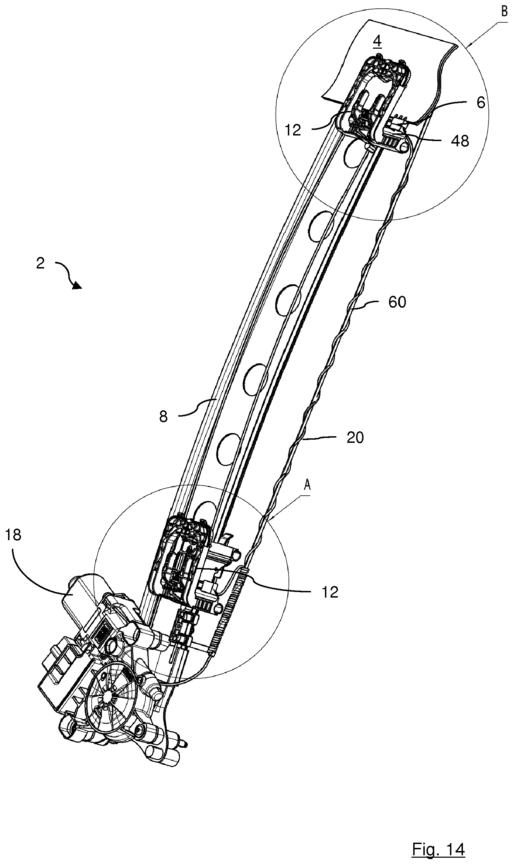

Fig. 14 zeigt eine sechste Ausführungsform der Erfindung, bei der die Leitung 20 als Spiralkabel ausgeführt ist. Das Spiralkabel ist um einen Führungsstabe 60 gewickelt, wodurch das Spiralkabel 20 axial geführt ist.

Der Mitnehmer 12 ist wiederum in zwei Positionen gleichzeitig dargestellt, einer unteren Position sowie in einer oberen Position. In einer unteren Position ist das Spiralkabel 20 zusammengezogen, in der oberen Position erstreckt es sich über den Führungsstab 60.

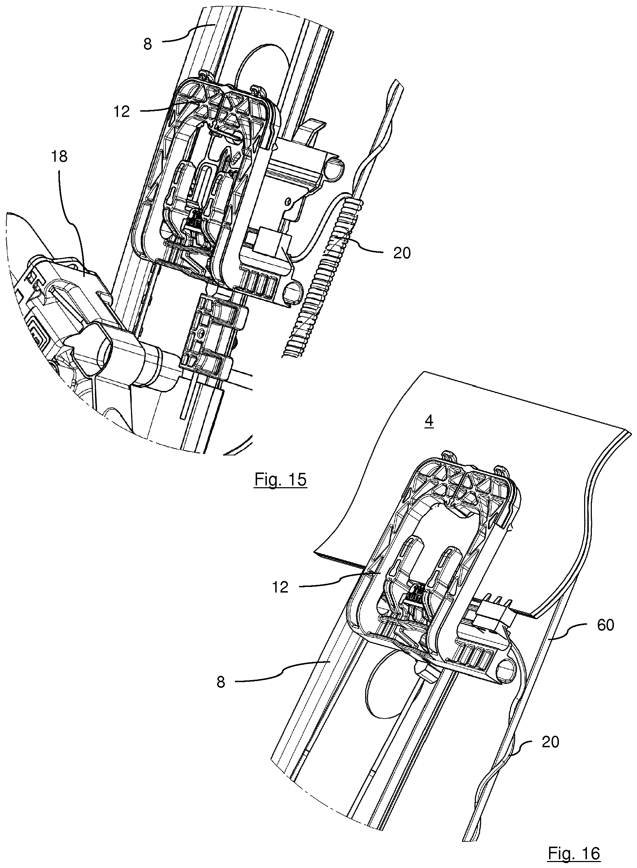

Fig. 15 zeigt eine Vergrößerung des Ausschnitts A aus Fig. 14. Dabei ist der Mitnehmer 12 in einer unteren Endposition dargestellt. Das Spiralkabel 20 ist komplett zusammengezogen und nimmt somit axial wenig Platz ein.

Fig. 16 zeigt eine vergrößerte Darstellung des Ausschnitts B aus Fig. 14, bei dem der Mitnehmer 12 in einer oberen Endposition gezeigt ist. Das Spiralkabel 20 ist axial nach oben erstreckt.

### Bezugszeichenliste

- 2: Fensterhebevorrichtung
- 4: Fenster
- 4.1: Aufnahme
- 6: Anschluss
- 8, 10: Führungsschienen
- 12, 14: Mitnehmer
- 16: Seilzug
- 18: Antrieb
- 20: Leitung
- 20.1, 20.2: Ader
- 20.3: Seele
- 20.4: Litzen
- 20.5: Kabelhülle
- 21.1: erstes Ende der Leitung
- 21.2: zweites Ende der Leitung
- 22: Teleskopstab
- 22.1: äußere Teleskophülse
- 22.2: innere Teleskophülse
- 24: Befestigungspunkt
- 26: Leitung
- 28: Anschluss
- 30: Leitung
- 32: Teleskopstab
- 34: Befestigungspunkt
- 36: Schleifkontakt
- 38: Kontakt
- 40, 42: Befestigung
- 44: Leiterbahn
- 46: Fixierer
- 48: Stecker
- 50: Aufwickelvorrichtung
- 52: Zugentlastung
- 54: Aufwickelvorrichtung
- 56: Aufwickelvorrichtung
- 56.1: Wickeltrommel
- 56.2: Achse
- 56.3, 56.4: Kontakte
- 56.5: Spiralfeder
- 56.6, 56.7: Gehäuse
- 58: Stecker
- 60: Führungsstab

## Patentansprüche

1. Fensterhebevorrichtung für ein Kraftfahrzeug, die zum Anheben und Absenken einer Fensterscheibe (4) des Kraftfahrzeuges ausgebildet ist, wobei die Fensterhebevorrichtung einen Mitnehmer (12, 14) und eine stromführende Leitung (20) aufweist, welche mit einem ersten Ende (21.1) ortsfest bezüglich einer Fahrzeugkarosserie anordenbar ist und mit einem zweiten Ende (21.2) ortsfest bezüglich des sich relativ zur Fahrzeugkarosserie beweglichen Mitnehmers (12, 14) zum Anheben und Absenken der Fensterscheibe (4) der Fensterhebevorrichtung (2) angeordnet ist, **dadurch gekennzeichnet, dass** die Leitung (20) mit ihrem ersten Ende (21.1) an einem mit Strom versorgten und gesteuerten Fensterhebeantrieb (18) der Fensterhebevorrichtung zum Antreiben des Mitnehmers (12, 14) festgelegt ist, wobei die Fensterscheibe (4) einen Anschluss (6) aufweist, mittels dessen sie mit Strom versorgbar ist und wobei der Mitnehmer (12) einen mit dem Anschluss (6) verbindbaren Stecker (48) zur Herstellung eines Kontaktes zwischen der Leitung (20) und der Fensterscheibe (4) aufweist.

2. Fensterhebevorrichtung nach Anspruch 1, **dadurch gekennzeichnet, dass** die Leitung (20) mittels Schleifkontakten (36) kontaktiert ist.

3. Fensterhebevorrichtung nach Anspruch 1 oder 2, **dadurch gekennzeichnet, dass** die Leitung (20) über eine Aufwickelvorrichtung (50; 54; 56) geführt ist.

4. Fensterhebevorrichtung nach Anspruch 3, **dadurch gekennzeichnet, dass** die Aufwickelvorrichtung (54) an einer Führungsschiene (8) der Fensterhebevorrichtung (2) angeordnet ist.

5. Fensterhebevorrichtung nach einem der vorangegangenen Ansprüche, **dadurch gekennzeichnet, dass** die Leitung als zugbelastbares oder als zug-druck-belastbares Betätigungskabel (20) ausgebildet ist.

6. Fensterhebevorrichtung nach Anspruch 5, **dadurch gekennzeichnet, dass** Adern (20.1, 20.2) der stromführenden Leitung (20) in der Seele (20.3) des Betätigungskabels (20) angeordnet sind.

7. Fensterhebevorrichtung nach einem der Ansprüche 1 oder 2, **dadurch gekennzeichnet, dass** die Leitung (20) als Spiralkabel ausgebildet ist.

8. Fensterhebervorrichtung nach einem der vorangegangenen Ansprüche, **dadurch gekennzeichnet, dass** die Fensterhebevorrichtung (2) wenigstens einen Teleskoparm (22; 32) aufweist, der an einem ersten Ende schwenkbar an einer Karosserie anordenbar ist und der an einem zweiten Ende schwenkbar mit dem Mitnehmer (12, 14) verbunden ist.

## Claims

1. Window raising device for a motor vehicle, which is designed for raising and lowering a window pane (4) of the motor vehicle, wherein the window raising device has a driver (12, 14) and a current-conducting line (20) which can be arranged at a first end (21.1) in a fixed position with respect to a vehicle body and is arranged at a second end (21.2) in a fixed position with respect to the driver (12, 14), which is movable relative to the vehicle body, for raising and lowering the window pane (4) of the window raising device (2), **characterized in that** the line (20) is secured at its first end (21.1) to a current-supplied and -controlled window raising drive (18) of the window raising device for driving the driver (12, 14), wherein the window pane (4) has a connection (6) by means of which the window pane can be supplied with current, and wherein the driver (12) has a plug (48), which is connectable to the connection (6), for producing contact between the line (20) and the window pane (4).

2. Window raising device according to Claim 1, **characterized in that** the line (20) is contacted by means of sliding contacts (36).

3. Window raising device according to Claim 1 or 2, **characterized in that** the line (20) is guided via a winding device (50; 54; 56).

4. Window raising device according to Claim 3, **characterized in that** the winding device (54) is arranged on a guide rail (8) of the window raising device (2).

5. Window raising device according to one of the preceding claims, **characterized in that** the line is designed as an actuating cable (20) which can be loaded in tension or which can be loaded in tension and compression.

6. Window raising device according to Claim 5, **characterized in that** wires (20.1, 20.2) of the current-conducting line (20) are arranged in the core (20.3) of the actuating cable (20).

7. Window raising device according to either of Claims 1 and 2, **characterized in that** the line (20) is designed as a spiral cable.

8. Window raising device according to one of the preceding claims, **characterized in that** the window raising device (2) has at least one telescopic arm (22; 32) which can be arranged pivotably at a first end on a body and which is connected pivotably at a second end to the driver (12, 14).

## Revendications

1. Dispositif lève-vitre pour un véhicule automobile qui est réalisé pour lever et abaisser une vitre de fenêtre (4) du véhicule automobile, le dispositif lève-vitre présentant un dispositif d'entraînement (12, 14) et une ligne électrique (20) qui peut être disposée avec une première extrémité (21.1) de manière fixe par rapport à une carrosserie du véhicule et qui est disposée avec une deuxième extrémité (21.2) de manière fixe par rapport au dispositif d'entraînement (12, 14), déplaçable par rapport à la carrosserie du véhicule, pour lever et abaisser la vitre de fenêtre (4) du dispositif lève-vitre (2), **caractérisé en ce que** la ligne (20) est attachée par sa première extrémité (21.1) à un entraînement de lève-vitre (18) du dispositif lève-vitre commandé et alimenté en courant électrique pour l'entraînement du dispositif d'entraînement (12, 14), la vitre de fenêtre (4) présentant un raccord (6) au moyen duquel elle peut être alimentée en courant électrique et le dispositif d'entraînement (12) présentant un connecteur enfichable (48) pouvant être raccordé au raccord (6) pour établir un contact entre la ligne (20) et la vitre de fenêtre (4).

2. Dispositif lève-vitre selon la revendication 1, **caractérisé en ce que** le contact avec la ligne (20) est établi au moyen de contacts glissants (36) .

3. Dispositif lève-vitre selon la revendication 1 ou 2, **caractérisé en ce que** la ligne (20) est guidée par le biais d'un dispositif d'enroulement (50 ; 54 ; 56).

4. Dispositif lève-vitre selon la revendication 3, **caractérisé en ce que** le dispositif d'enroulement (54) est disposé au niveau d'un rail de guidage (8) du dispositif lève-vitre (2).

5. Dispositif lève-vitre selon l'une quelconque des revendications précédentes, **caractérisé en ce que** la ligne est réalisée sous forme de câble d'actionnement (20) résistant à la traction ou à la traction-compression.

6. Dispositif lève-vitre selon la revendication 5, **caractérisé en ce que** des brins (20.1, 20.2) de la ligne électrique (20) sont disposés dans l'âme (20.3) du câble d'actionnement (20).

7. Dispositif lève-vitre selon l'une quelconque des revendications 1 ou 2, **caractérisé en ce que** la ligne (20) est réalisée sous forme de câble spiralé.

8. Dispositif lève-vitre selon l'une quelconque des revendications précédentes, **caractérisé en ce que** le dispositif lève-vitre (2) présente au moins un bras télescopique (22 ; 32) qui peut être disposé par une première extrémité de manière pivotante au niveau d'une carrosserie et qui est connecté par une deuxième extrémité de manière pivotante au dispositif d'entraînement (12, 14).
